# EUROPÄISCHE PATENTANMELDUNG

(11) **EP 0 986 156 A2**
(43) Veröffentlichungstag der Anmeldung: **15.03.2000**
(21) Anmeldenummer: 99115805.6
(22) Anmeldetag: 11.08.1999
(51) Int. Cl.: H02G 3/12

(54) **Befestigungsvorrichtung für Elektroinstallationskästen oder dergl. zur Befestigung derartiger Kästen in Hohlwänden**

(30) Priorität: 11.09.1998 DE 29816300 U
(71) Anmelder: STRIEBEL & JOHN GmbH & Co. KG, D-77880 Sasbach (DE)
(72) Erfinder: Roth, Michael, 77880 Sasbach (DE); Rapp, Jürgen, 77855 Achern (DE)
(74) Vertreter: Thoma, Friedrich, Dipl.-Ing.(FH)

(57) **Zusammenfassung**

Bei einer Befestigungsvorrichtung (1.2) für Elektroinstallationskästen (6) oder dergl., zur Befestigung derartiger Kästen (6) in Hohlwänden (11), ist die Befestigungsvorrichtung (1.2) mit einer exzentrisch angeordneten Befestigungskralle (3) versehen, die axial verschiebbar und um mindestens 90° verdrehbar gelagert ist.

## Beschreibung

Die Erfindung betrifft eine Befestigungsvorrichtung für Elektroinstallationskästen oder dergl. zur Befestigung derartiger Kästen in Hohlwänden, mit den Merkmalen nach dem Oberbegriff des Schutzanspruchs 1.

Bei Elektroinstallationskästen oder dergl. Kästen ist es erforderlich, daß diese nicht nur einfach, rationell und wirtschaftlich in einer entsprechenden Aufnahmeöffnung einer Hohlwand zweckmäßig montier- und befestigbar sind, sondern auch, daß die dazu vorgesehenen Befestigungsvorrichtungen relativ große Befestigungstoleranzen bzw. Hohlwandstärken spielfrei kraftschlüssig ausgleichen. Dabei soll sichergestellt sein, daß eine derartige Befestigungsvorrichtung nicht nur einfach, rationell, zweckmäßig und wirtschaftlich handhabbar bzw. montierbar, sondern auch, daß diese Befestigungsvorrichtung rationell und wirtschaftlich herstellbar ist.

Aus der DE-PS 21 37 299 ist eine elektrische Abzweigdose für Unterputzanordnung in dünnen Wänden bekannt, bei der am Dosenmantel längsverstellbar geführte Streifen vorgesehen sind und an denen dosenbodenendseitig Klemmbakken angeordnet sind, während die frontseitigen Streifenendteile über die Dosenmündung vorstehen und durch an den Streifen und ihren Führungen angeordnete, miteinander korrespondierende, in Zugrichtung der Streifen zur Dosen-Frontseite hin die Streifen freigebende, in entgegengesetzter Richtung jedoch die Streifen sperrende, Rastzähne aufweisen.

Diese bekannte Befestigungsvorrichtung, mit der zwar relativ große Toleranzen hinsichtlich der Dicke einer Hohlwand ausgeglichen werden können, ist mit dem erheblichen Nachteil behaftet, daß die mechanische Steifigkeit der Streifen im Bereich der endseitigen Klemmbacken relativ gering ist, sodaß eine zuverlässige kraftschlüssige Befestigung der Dose in einer Hohlwand durch ein Verbiegen des Streifens in diesem Bereich in Frage gestellt ist.

Aus der WO 96/14682 ist eine Elektroinstallationsdose für die Montage in Wänden, insbesondere Hohlwänden bekannt, bei der an den Seitenwänden der Dose ebenfalls sogenannte Zuglaschen vorgesehen sind, die in Achsrichtung der Dose in entsprechenden Führungen verschiebbar gelagert und mit einer Verzahnung versehen sind, der eine Gegenverzahnung an der Dose zugeordnet ist, wobei die Gegenverzahnung an einer federnden Zunge der Führung vorgesehen ist.

Auch diese Konstruktion ist mit dem Nachteil behaftet, daß sich beim Anziehen der Zuglasche mit der dort endseitig vorgesehenen Pratze gegen die innere Hohlwandseite, die Pratze im Bereich der Verbindung mit der Zuglasche verbiegen und damit eine kraftschlüssig zuverlässige Befestigung nicht gewährleistet werden kann.

Der Erfindung liegt die Aufgabe zugrunde, die Nachteile der zuvor gewürdigten bekannten streifenförmigen Befestigungsvorrichtungen zu beseitigen und eine Befestigungsvorrichtung für die eingangs genannten Elektroinstallationskästen oder dergl. zu schaffen, die nicht nur mechanisch stabil ausgebildet und mit der ein derartiger Installationskasten zuverlässig kraftschlüssig in einer entsprechenden Aufnahmeöffnung einer Hohlwand befestigbar ist, sondern die auch einfach, rationell und wirtschaftlich herstellbar und handlich bedienbar ist.

Diese Aufgabe wird mit den Merkmalen im kennzeichenden Teil des Patentanspruchs 1 gelöst und in den Unteransprüchen sind weitere vorteilhafte Einzelheiten beansprucht.

Vorteilhaft bei der neuen Befestigungsvorrichtung für Elektroinstallationskästen oder dergl. Kästen, zur Befestigung derartiger Kästen in Hohlwand-Aufnahmeöffnungen, ist nicht nur, daß die Befestigungskralle, die exzentrisch und einstückig an einem Führungselement angeordnet ist und das um mindestens 90° verdrehbar und axial verschiebbar in einer zylinderförmigen Lagerhülse gelagert, mittelbar über ein handliches Zugelement bedienbar und kraftschlüssig gegenüber einer Hohlwand feststellbar ist, sondern auch, daß die zweistückige neue Befestigungsvorrichtung mit der Lagerhülse mit dem dynamischen Führungselement mit integriertem Griffelement und der Befestigungskralle, zusammen eine modulare Funktionseinheit bilden, die zweckmäßigerweise in einem entsprechenden kreisförmigen Ausschnitt und/oder einer teilzylinderförmigen Ausbildung an einem Installationsverteilerkasten oder dergl., handlich, insbesondere rastend, einbaubar ist. Zu diesem Zweck ist die Lagerhülse axial vorderseitig mit zwei spiegelbildlich einander gegenüberliegenden, einseitig gelagerten, Rastelementen ausgestattet, die eine einfache, handliche und rationelle Montage der neuen Befestigungsvorrichtung in einem Elektroinstallationskasten gewährleisten.

Zweckmäßigerweise sind an einem derartigen Kasten, im Kastenseitenwandbereich und in gewissen Abständen zueinander mehrere, vorteilhafterweise zwei, derartige Ausschnitte und/oder Ausbildungen für die lösbar kraftschlüssige Montage der neuen zweistückigen modularen Befestigungsvorrichtung vorgesehen.

In diesem Zusammenhange ist es jedoch auch vorgesehen, daß die zylinderförmige Lagerhülse auch einstückig an eine Elektroinstallationskasten oder dergl., beispielsweise einem Verteilerkasten, angeordnet sein kann.

Ein weiterer montagezweckmäßiger Vorteil der neuen Befestigungsvorrichtung besteht darin, daß dort das zur manuellen zweckmäßigen mittelbaren Handhabung beim axialen Herausziehen des Zugelementes, zur kraftschlüssigen Befestigung der Befestigungskralle in einer Hohlwand-Aufnahmeöffnung vorgesehne, schlaufenförmige, Dreh- und Zugelement, nach der kraftschlüssigen Befestigung der Befestigungskralle, im Bereich der Verbindung mit dem Führungselement, durch mechanisch manuelles Verwinden, zweckmäßig abreisbar ist. Zu diesem Zwecke ist im Bereich der Verbindung des Dreh- und Zugelementes mit dem Führungselement eine Sollbruchstelle vorgesehen.

Außerdem ist daran gedacht, daß die neue Befestigungsvorrichtung im Bereich des oben erwähnten zweckmäßigen Dreh- und Zugelementes einseitig mit einem Zeiger ausgestattet ist. Dieser Zeiger ist einerseits zur optischen Anzeige der jeweiligen Funktionsstellung der Befestigungskralle bei der Einbaumontage eines Elektroinstallationskastens oder dergl. in eine Hohlwand-Aufnahmeöffnung vorgesehen. Anderseits verhindert dieser zweckmäßige Zeiger ein selbsttätiges Herausdrehen der Befestigungskralle beim Einbau des Kastens in eine Hohlwand-Aufnahmeöffnung.

Ein bevorzugtes Ausführungs- und Anwendungsbeispiel der neuen zweistückigen Befestigungsvorrichtung ist in den Zeichnungen dargestellt und wird im folgenden näher erläutert. Es zeigen
- Fig. 1: eine schaubildliche Darstellung der modularen Befestigungsvorrichtung,
- Fig. 2: eine schaubildliche Darstellung der Lagerhülse der Befestigungsvorrichtung nach Fig. 1,
- Fig. 3: eine schaubildliche Darstellung des Führungselementes mit der Befestigungskralle der Befestigungsvorrichtung nach Fig. 1,
- Fig. 4: eine schaubildliche Schnittansicht durch die Befestigungsvorrichtung nach Fig. 1 vor der Einbaumontage in einen Elektroinstallationskasten oder dergl.
- Fig. 5: eine schaubildliche Darstellung der Rückseite eines Elektroinstallationskastens im Zustand der Bestückung mit modularen Befestigungsvorrichtungen nach Fig. 1,
- Fig. 6: eine schaubildliche Darstellung der Vorderseite eines Elektroinstallationskastens mit funktionskonform eingebauten Befestigungsvorrichtungen nach Fig. 1, vor dem Einbau in eine Hohlwand,
- Fig. 7: eine schaubildliche Darstellung eines, in eine Hohlwand eingebauten, Elektroinstallationskastens, sowie der funktionskonformen manuellen Ausrichtung der einzelnen Befestigungsvorrichtungen,
- Fig. 8: eine schaubildliche Schnittdarstellung eines, in eine Hohlwand eingesetzten, Elektroinstallationskasten mit einer Funktionsstellung des Führungselementes der Befestigungsvorrichtung 'Befestigungskralle in Schlielßposition',
- Fig. 9: eine schaubildliche Schnittdarstellung durch eine, in einem Elektroinstallationskasten oder dergl. eingebauten, Befestigungsvorrichtung in der Funktionsstellung des Befestigungselementes 'Befestigungskralle kraftschlüssig gegenüber einer Hohlwand geschlossen' und
- Fig. 10: eine schaubildliche Längsschnittdarstellung, durch eine in einem Elektroinstallationskasten oder dergl. eingebauten, Befestigungsvorrichtung in der Funktionsstellung 'Befestigungskralle gegenüber einer Hohlwand kraftschlüssig geschlossen, Dreh- und Zugelement entfernt'.

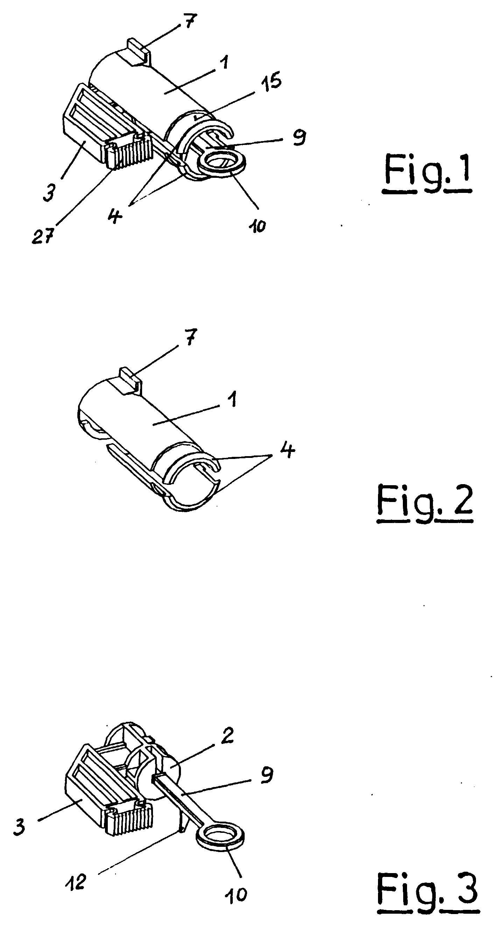

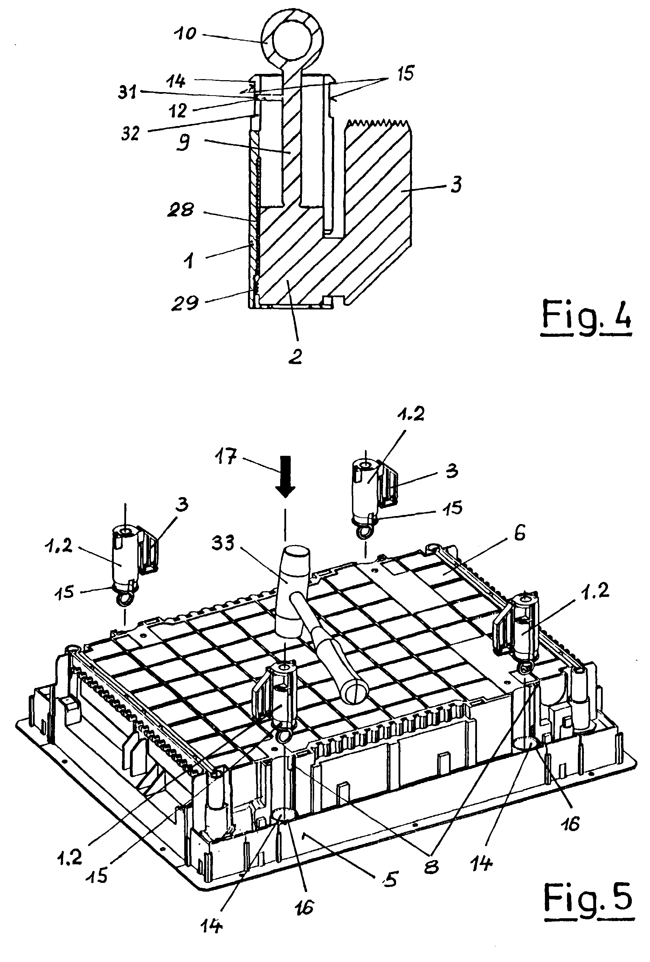

Die in den Fig. 1 und 4 im wesentlichen dargestelle modular aufgebaute, zweiteilige Befestigungsvorrichtung besteht im einzelnen aus der, in der Fig. 2 gezeigten, zylinderförmigen Lagerhülse 1 und dem, aus der Fig. 3 ersichtlichen, in der Lagerhülse 1 koaxial verschiebbar gelagerten und dort um ca. 90° verdrehbaren, Führungselement 2, an dem einseitig eine radial abstehende Befestigungskralle 3 einstückig vorgesehen ist.

Die Lagerhülse 1 ist einseitig und einstückig mit insbesondere zwei spiegelbildlich einander gegenüberliegend angeordneten, radial ausgebildeten und wirkenden, Rastelementen 4 ausgestattet, für den rastend kraftschlüssigen Einbau in entsprechende Befestigungslöcher 14, die insbesondere im Bereich der Außenwandung 5 eines Elektroinstallationskasten 6, wie dies aus den Fig. 4, 5, 8, 9 und 10 näher ersichtlich ist. 15 bezeichnet Rastnuten am äußeren Umfang der beiden Rastelemente 4, die mit einem ringförmigen koaxialen Steg 16 des Befestigungsloches 14 form- und kraftschlüssig in Eingriff kommen.

7 bezeichnet dort ein stegförmiges Lagenfixierelement, das einseitig an der Lagerhülse 1 angeordnet ist, und das beim Einbau in einen Elektroinstallationskasten 6, mit einer, an einem derartigen Kasten 6 vorgesehenen, Nut 8, in einen formschlüssigen Eingriff kommt, zur verdrehungsgesicherten Lagenfixierung der Lagerhülse 1 bzw. der Befestigungsvorrichtung 1.2 gegenüber dem Elektroinstallationskasten 6.

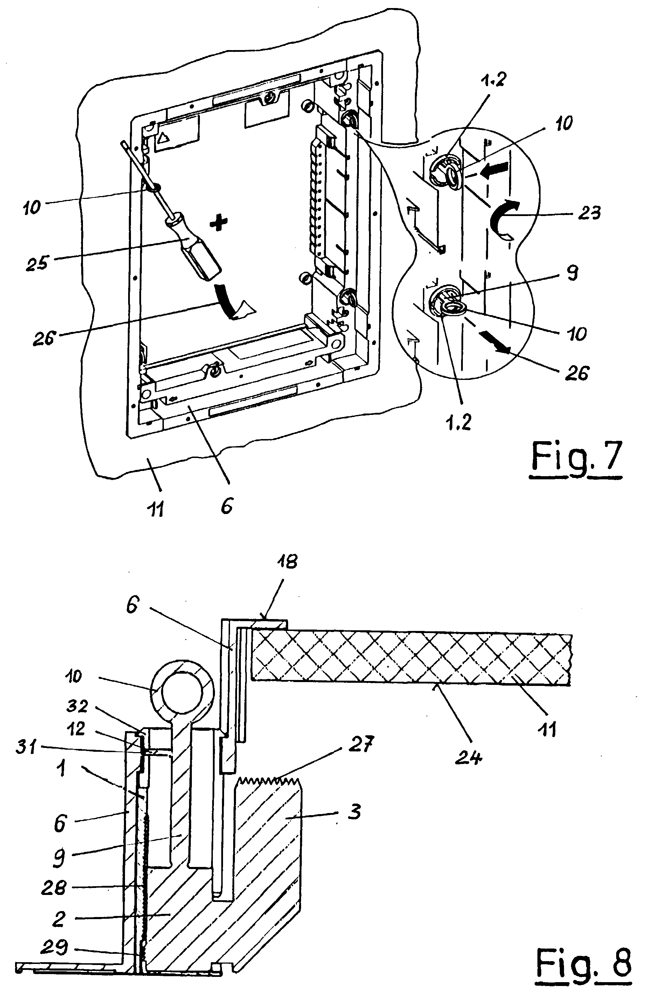

9 bezeichnet ein sogenanntes Dreh- und Zugelement, das einseitig am Führungselement 2 stoffschlüssig angeordnet und das endseitig mit einer Schlaufe 10, insbesondere für den Eingriff eines Hilfswerkzeuges, beispielsweise eines Schraubendrehers, wie aus der Fig. 7 näher ersichtlich ist, zum Drehen des Führungselementes 2, und damit zum kraftschlüssigen Feststellen der Befestigungskralle 3 gegenüber einer Hohlwand 11.

Das Dreh- und Zugelement 9 kann zweckmäßigerweise nach dem kraftschlüssigen Feststellen der Befestigungskralle 3 gegenüber einer Hohlwand 11, durch ein weiteres Verdrehen bzw. Verwinden gegenüber der anschlagbedingten Drehbegrenzung des Führungselementes 2 in der Lagerhülse 1, abgedreht bzw. abgerissen und damit entfernt werden.

12 bezeichnet einen einseitig am Dreh- und Zugelement 9 vorgesehenen Zeiger, mittels dem einerseits die jeweilige räumliche Lage der Befestigungskralle 3 im eingebauten Zustand der Befestigungsvorrichtung angezeigt wird. Andererseits verhindert dieser Zeiger 12, daß sich die Befestigungskralle 3 beim Einbau des Elektroinstallationskastens 6 in eine Öffnung 20 einer Hohlwand 11. Zu diesem Zweck, steht der Zeiger 12 mit der Zeigerspitze 31 in Eingriff mit dem axial verlaufenden Schlitz 32 am Führungselement 2, wie dies aus der Fig. 4 klar ersichtlich ist.

Sowohl die Lagerhülse 1, als auch das Führungselement 2 mit der Befestigungskralle 3 und dem Dreh- und Zugelement 9 sind zweckmäßigerweise aus einem Kunststoff spritztechnisch hergestellt.

28 und 29 bezeichnen jeweils einseitig gerichtete Sperrzähne eines Zahnrichtgesperres, das zwischen der Lagerhülse 1 und dem Führungselement 2 wirksam angeordnet ist

Zum Einbau der neuen modularen Befestigungsvorrichtungen 1.2 in einen Elektroinstallationskasten 6, werden, wie aus der Fig. 5 ersichtlich ist, die einzelnen Befestigungsvorrichtungen 1.2, zweckmäßigerweise mittels eines Hammers 33 in Pfeilrichtung 17 in die, im Elektroinstallationskassten 6 vorgesehenen Fixier- und Befestigungslöcher 14 eingeschlagen und dort durch den Eingriff der Rastnuten 15 mit dem Steg 16 des jeweiligen Befestigungsloches 14 form- und kraftschlüssig lagenfixiert.

3 bezeichnet dort die Befestigungskralle und 9 kennzeichnet das zur Kastenvorderseite 18 hin gerichtete Dreh- und Zugelement mit der endseitigen Schlaufe 10.

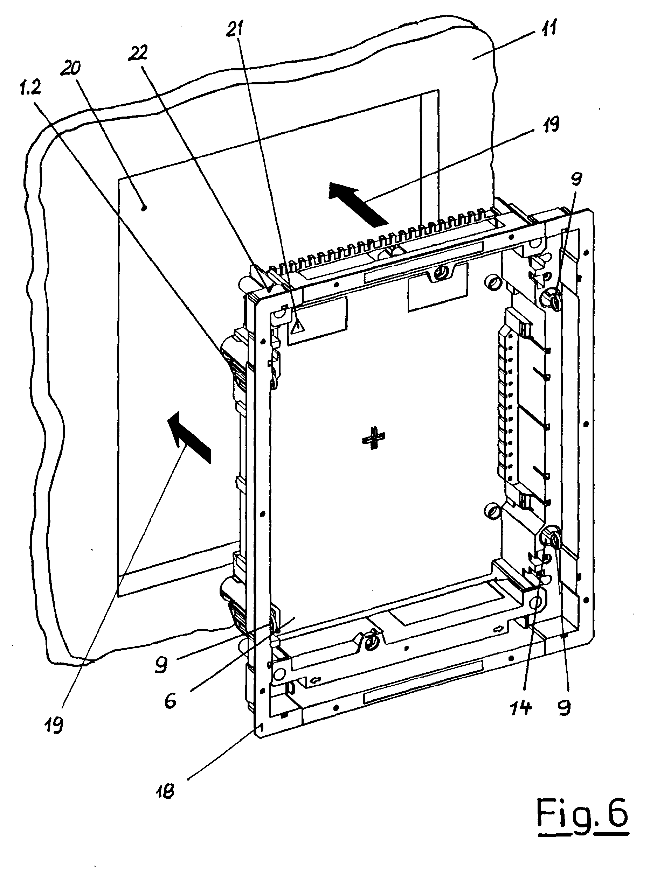

Die Fig. 6 zeigt den Elektroinstallationskasten 6 mit den Befestigungselementen 1.2, der in Pfeilrichtung 19 in die Öffnung 20 einer Hohlwand 11 einsetzbar ist. 18 bezeichnet die Kastenvorderseite und 9 zeigt die Dreh- und Zugelemente der in den Befestigungslöchern 14 form- und kraftschlüssig eingesetzten und in dieser Figur nicht näher sichtbaren Befestigungsvorrichtungen. 21 kennzeichnet eine am Elektroinstallationskasten 6 vorgesehene Pfeilmarkierung, welche beim Einbau des Kastens 6 in eine Hohlwand 11 auf die oben zu liegende Kastenseite 22 hinweist.

Nach dem Einsetzen des Kastens 6 in die Öffnung 20 der Hohlwand 11, werden, wie aus den Fig. 7 und 8 ersichtlich ist, die einzelnen Führungselemente 2 mittels der Dreh- und Zugelemente 9 zunächst in Pfeilrichtung 23 bis an den Anschlag gedreht, sodaß die Befestigungskralle 3 hinter die Rückwand 24 der Hohlwand 11 zu liegen kommt. Der zweckmäßige, am Dreh- und Zugelement 9 vorgesehene Zeiger 12 zeigt dabei die jeweilige Drehlage der Befestigungskralle 3 an.

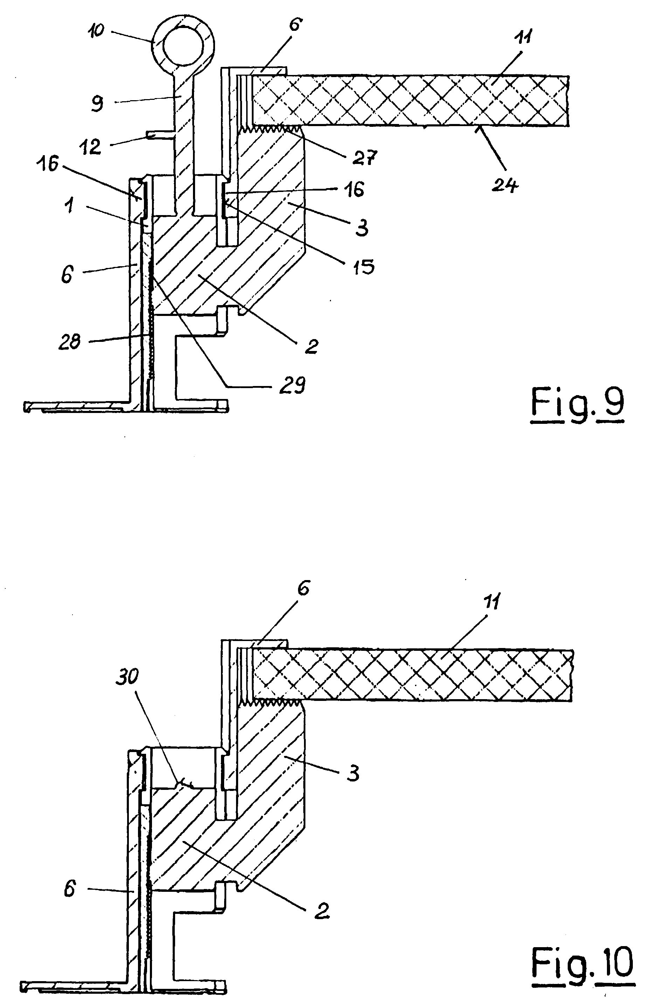

In dieser Stellung der Befestigungskralle 3 gegenüber der Rückwand 24, wie dies die Fig. 8 zeigt, wird, zweckmäßigerweise mittels eines Hilfswerkzeuges, insbesondere eines Schraubendrehers 25, der mit der Schlaufe 10 am jeweiligen Dreh- und Zugelement 9 in Eingriff bringbar ist, das Führungselement 2 mit der Befestigungskralle 3 in Pfeilrichtung 26 soweit angezogen, bis die Befestigungskralle mit ihrer vorderseitigen Verzahnung 27 kraftschlüssig auf der Rückwand 24 der Hohlwand 11 anliegt, wie aus der Fig. 9 ersichtlich ist.

In dieser Position der Befestigungskralle 3, im Anschlag an der Rückwand 24, ist die Zeigerspitze 31 des Zeigers 12 aus dem Eingriff mit dem Schlitz 32 des Führungselementes 2 axial herausgetreten und hat damit die Funktion der Lagenfixierung der Befestigungskralle 3 gegenüber dem Führungselement 2 verloren, wie aus der Fig. 8 ersichtlich ist.

Die axiale Montagelage des Führungselementes 2 mit der Befestigungskralle 3 in der Lagerhülse 1 wird durch das zwischen der Lagerhülse 1 und dem Führungselement 2 wirksam angeordnete, Richtgesperre mit den miteinander in Eingriff stehenden Sperrzähnen 28 und 29 zuverlässigt lagenfixiert.

Nach Beendigung der kraftschlüssigen Montage des Elektroinstallationskastens 6 in der Hohlwand 11, wird das Dreh- und Zugelement 9 im Bereich der Verbindung mit dem Führungselement 2, wo eine Sollbruchstelle 30 vorgesehen ist, durch mechanisch manuelles Verwinden, zweckmäßig abgedreht bzw. abgerissen, wie dies aus der Fig. 10 ersichtlich ist.

Es liegt im Rahmen der Neuerung, daß die Lagerhülse 1 der Befestigungsvorrichtung erforderlichenfalls auch einstückig mit einem Elektroinstallationskasten 6 oder dergl. verbunden sein kann.

Außerdem beschränkt sich der Einsatz der vorliegenden neuen Befestigungsvorrichtung nicht nur auf Elektroinstallationskästen 6, sondern es ist vorgesehen, diese Befestigungsvorrichtung unmittelbar oder mittelbar auch zur Befestigung von fernmeldetechnischen oder sanitären Installationskästen in entsprechenden Hohlwänden einzusetzen.

Darüberhinaus ist es vorgesehen, die vorliegende Befestigungsvorrichtung auch mittelbar oder unmittelbar zur Befestigung von Geräten und/oder von Dosen für Installationsgeräten in Hohlwänden einzusetzen.

## Patentansprüche

1. Befestigungsvorrichtung (1.2) für Elektroinstallationskästen (6) oder dergl., zur Befestigung derartiger Kästen (6) in Hohlwänden (11), **dadurch gekennzeichnet,** daß die Befestigungsvorrichtung (1.2) mit einer exzentrisch angeordneten Befestigungskralle (3) versehen ist, die axial verschiebbar und um mindestens 90° verdrehbar gelagert ist.

2. Befestigungsvorrichtung nach Anspruch 1, dadurch gekennzeichnet, daß die Befestigungskralle (3) exzentrisch an einem Führungselement (2) angeordnet ist, und daß das Führungselement (2) in einer Lagerhülse (1) axial verschiebbar und um mindestens 90° verdrehbar gelagert ist.

3. Befestigungsvorrichtung nach Anspruch 1 und 2, dadurch gekennzeichnet, daß die Lagerhülse (1) und das Führungselement (2) zylindrisch ausgebildet sind.

4. Befestigungsvorrichtung nach Anspruch 1 bis 3, dadurch gekennzeichnet, daß das Führungselement (2) einseitig mit einem axial verlaufenden, manuell beaufschlagbaren, Dreh- und Zugelement (9) ausgestattet ist.

5. Befestigungsvorrichtung nach Anspruch 4, dadurch gekennzeichnet, daß das Dreh- und Zugelement (9) einseitig mit einer ringförmigen Schlaufe (10) versehen ist.

6. Befestigungsvorrichtung nach Anspruch 1 bis 5, dadurch gekennzeichnet, daß das Führungselement (2) einseitig mit einem Zeiger (12) zur Anzeige der Drehlage des Führungselementes (2) in der Lagerhülse (1) versehen ist.

7. Befestigungsvorrichtung nach Anspruch 6, dadurch gekennzeichnet, daß der Zeiger (12) am Dreh- und Zugelement (9) einstückig angeordnet ist.

8. Befestigungsvorrichtung nach Anspruch 1 bis 7, dadurch gekennzeichnet, daß die Lagerhülse (1) und das Führungselement (2) mit der Befestigungskralle (3) und dem Dreh- und Zugelement (9) als modulare vollfunktionsfähige Baueinheit ausgebildet sind.

9. Befestigungsvorrichtung nach Anspruch 1 bis 8, dadurch gekennzeichnet, daß der Zeiger (12) mit der Zeigerspitze (31) in axiallösbarem Eingriff mit einem Schlitz (32) am Führungselementes (2) steht.

10. Befestigungsvorrichtung nach Anspruch 1 bis 9, dadurch gekennzeichnet, daß die Lagerhülse (1) einseitig mit Rastelementen (4), zur kraftschlüssigen Befestigung der Befestigungsvorrichtung (1.2) in einem Befestigungsloch (14) eines Kastens (6), versehen ist.

11. Befestigungsvorrichtung nach Anspruch 10, dadurch gekennzeichnet, daß die Rastelemente (4) radial ausgebildet, koaxial zueinander verlaufend angeordnet sind.

12. Befestigungsvorrichtung nach Anspruch 10 und 11, dadurch gekennzeichnet, daß die Rastelemente (4) als radial verlaufende, koaxial angeordnete Rastnuten (15) und Stege (16) ausgebildet sind.

13. Befestigungsvorrichtung nach Anspruch 1 bis 12, dadurch gekennzeichnet, daß am äußeren Umfang der Lagerhülse (1) ein stegförmiges Lagenfixierelement (7) für den Eingriff mit einer Nut (8) eines Kastens (6) einseitig angeordnet ist.

14. Befestigungsvorrichtung nach Anspruch 1 bis 13, dadurch gekennzeichnet, daß zwischen der Lagerhülse (1) und dem Führungselement (2) ein Zahnrichtgesperre mit jeweils einseitig gerichteten Sperrzähnen (28 und 29) wirksam angeordnet ist.

15. Befestigungsvorrichtung nach Anspruch 1 bis 14, dadurch gekennzeichnet, daß die Befestigungskralle (3) auf der, einer Befestigungswand (24) gegenüberliegenden, Vorderseite mit einer Verzahnung (27) versehen ist.

16. Befestigungsvorrichtung nach Anspruch 1 bis 15, dadurch gekennzeichnet, daß die Befestigungsvorrichtung (1.2) mit der Lagerhülse (1) und dem Führungselement (2), mit der am Führungselement (2) vorgesehenen Befestigungskralle (3) und dem Dreh- und Zugelement (9) aus einem Kunststoff hergestellt ist.

17. Befestigungsvorrichtung nach Anspruch 1 bis 16, dadurch gekennzeichnet, daß zwischen dem Führungselement (2) und dem Dreh- und Zugelement (9) eine Sollbruchstelle (30) drehwirksam angeordnet ist.

18. Befestlgungsvorrichtung nach Anspruch 1 bis 17, dadurch gekennzeichnet, daß die Lagerhülse (1) einstückig mit einem Kasten (6) verbunden ist.
